# EUROPÄISCHE PATENTSCHRIFT

(11) **EP 1 384 372 B1**
(45) Veröffentlichungstag und Bekanntmachung des Hinweises auf die Patenterteilung: **21.06.2006**
(21) Anmeldenummer: 02729855.3
(22) Anmeldetag: 08.04.2002
(51) Int. Cl.: H04M 1/03

(54) **ELEKTRONISCHES GERÄT MIT EINER LAUTSPRECHEREINRICHTUNG**
ELECTRONIC UNIT COMPRISING A LOUDSPEAKER DEVICE
DISPOSITIF ELECTRONIQUE COMPRENANT UN SYSTEME DE HAUT-PARLEUR

(30) Priorität: 03.05.2001 DE 10121523
(43) Veröffentlichungstag der Anmeldung: 28.01.2004
(73) Patentinhaber: BenQ Mobile GmbH & Co. oHG, 81667 München (DE); BenQ Corporation, Gueishan Taoyuan 333 (TW)
(72) Erfinder: BRENNER, Stefan, 71083 Herrenberg (DE); KÖBELIN, Jürgen, 89134 Blaustein (DE); SCHOGER, Frank, 89171 Illerkirchberg (DE); STETTER-ALLE, Raimund, 89073 Ulm (DE)
(74) Vertreter: Aufhauser, Christoph
(86) Internationale Anmeldenummer: PCT/DE2002/001281
(87) Internationale Veröffentlichungsnummer: WO 2002/091793

(56) Entgegenhaltungen:
- EP-A- 0 978 978
- WO-A-00/59263
- WO-A-94/11979
- WO-A-98/48595
- US-A- 5 201 069
- US-A- 5 923 750
- PATENT ABSTRACTS OF JAPAN vol. 2000, no. 02, 29. Februar 2000 (2000-02-29) & JP 11 313138 A (FUJITSU LTD), 9. November 1999 (1999-11-09)

## Beschreibung

Die Erfindung betrifft ein elektronisches Gerät mit einer Lautsprechereinrichtung nach dem Oberbegriff des Anspruchs 1. Ein solches Gerät ist aus der Patenstschritt US-A-5 923 750 bekannt.

Kleine tragbare elektronische Geräte - insbesondere solche, die während des Gebrauches in der Hand gehalten werden (sogenannte "Handhelds") - sind aus dem alltäglichen Leben der Menschen in den Industrieländern nicht mehr wegzudenken. Viele dieser Geräte haben eine eingebaute Lautsprechereinrichtung zur Musik- und/oder Sprachwiedergabe ohne angeschlossene Ohr- bzw. Kopfhörer. Die Musik- bzw. Sprachwiedergabe über einen solchen eingebauten Lautsprecher ist zwar gegenüber einer Kopfhörerwiedergabe mit einem erhöhten Leistungsverbrauch verbunden, für den Benutzer in den meisten Fällen aber komfortabler. Das gilt speziell auch für Mobil- und Schnurlostelefone, und hier insbesondere bei einem kommenden Ruf.

Mit dem Siegeszug der Mobiltelefone und der zunehmenden Verbreitung von Schnurlostelefonen im privaten wie kommerziellen Bereich sind zudem auch handgehaltene Geräte mit Mikrofonen zur Spracheingabe zu Massenartikeln geworden. Diese Entwicklung wird aber auch durch das Vordringen der Sprachsteuerung bei Datenverarbeitungsgeräten, wie Organizern, PDAs, Handheld-PCs und Taschenübersetzern, wesentlich beschleunigt.

Derartige Geräte sind nicht nur wegen ihrer technischen Funktionen, sondern auch als Lifestyle-Artikel gefragt. Bei ihrer Gestaltung müssen daher Modetrends beachtet werden, um sie über ihre gesamte physische Lebensdauer attraktiv für den Benutzer zu halten. Aus diesem Grund bieten viele Hersteller für derartige Geräte austauschbare Gehäuseteile an, mit denen der Nutzer das äußere Erscheinungsbild des Gerätes jederzeit seinen aktuellen ästhetischen Bedürfnissen anpassen kann.

Es handelt sich dabei in der Regel um Gehäuse-Oberschalen oder Abdeckungen, die denjenigen Teil des Gehäuses bilden, unter dem sowohl die Lautsprechereinrichtung als auch das Mikrofon angeordnet sind. Das Abnehmen des ursprünglichen Gehäuseteils und das Aufsetzen eines Austauschteils muß für den Nutzer schnell und leicht und möglichst ohne Werkzeug möglich sein. Es dürfen sich dabei aber die akustischen Eigenschaften des Gerätes nicht wesentlich verschlechtern.

Neben Mobiltelefonen und anderen Handhelds, die nach dem soeben skizzierten Prinzip aufgebaut sind, gibt es natürlich weiterhin Ausführungen, bei denen die einzelnen Gehäuseteile miteinander verschraubt oder dauerhaft verbunden sind. Auch hier treten natürlich bei der Fertigung der Gehäuseteile bestimmte Maßabweichungen auf, die u. U. die akustischen Eigenschaften des Gerätes in unzulässiger Weise verschlechtern können.

Die bei solchen Geräten vorgesehenen Schallaustrittsöffnungen umfassen in der Regel einen ersten Öffnungsabschnitt der Hörkapsel selbst oder eines Montagerahmens, in dem diese sitzt, und einen zweiten, dem Gehäuseoberteil zugeordneten Öffnungsabschnitt. Zwischen der Hörkapsel und dem Gehäuseoberteil ist eine akustische Abdichtung bzw. Entkopplung vorzusehen, um eine negative Beeinflussung der Klangeigenschaften durch das Gehäuse (Resonanzen, "Scheppern" etc.) zu verhindern. Dies wird bei bekannten Geräten durch das Einkleben von zwischen beiden Öffnungsbereichen liegenden Dichtungsringen realisiert.

Zusätzliche Dichtungen stellen zusätzlich zu fertigende, logistisch zu handhabende und schließlich zu montierende Teile und damit einen Faktor der tendenziellen Verteuerung der Herstellung der in Rede stehenden Geräte dar. Derartige Kostenfaktoren wirken sich um so stärker aus, je größer der Wettbewerbsdruck auf diesen technischen Gebieten und damit der Kostendruck in den Fertigungsprozessen der Geräte ist.

Der Erfindung liegt daher die Aufgabe zugrunde, ein verbessertes elektronisches Gerät der gattungsgemäßen Art anzugeben, welches einfacher und kostengünstiger herstellbar ist, ohne daß Nachteile hinsichtlich der akustischen Eigenschaften zu befürchten sind.

Diese Aufgabe wird durch ein Gerät mit den Merkmalen des Anspruchs 1 gelöst.

Die Erfindung schließt den Gedanken ein, die Halterung der Lautsprechereinrichtung und die erforderliche akustische Abdichtung zwischen der Lautsprechereinrichtung und einem (insbesondere austauschbaren) Gehäuseoberteil durch ein einstückig gefertigtes Halterungs- und Dichtelement zu bewerkstelligen. Mit der Erfindung wird somit der wesentliche Vorteil erreicht, daß die Lautsprechereinrichtung und das Gehäuseoberteil ohne zusätzliche Einfügung eines separaten Dichtungselementes besonders einfach und schnell montiert werden können. Zudem fällt der mit der separaten Herstellung, Lagerhaltung und Zuführung eines Zusatzteiles verbundene Aufwand fort, der sich bei einem auf Kostenminimierung ausgerichteten Produktionsprozeß deutlich nachteilig auswirkt.

In einer bevorzugten Ausführung der Erfindung handelt es sich bei dem Gerät um ein Mobilfunk-Endgerät mit einer Leiterplatte, auf der in an sich bekannter Weise die in diesem Fall als Hörkapsel bezeichnete Lautsprechereinrichtung angeordnet ist, und einer aufsteckbaren Gehäuse-Oberschale. Auch ein Schnurlostelefon ist grundsätzlich so aufgebaut (wenn auch derzeit austauschbare Oberschalen für Schnurlostelefone noch weniger verbreitet sind als für Mobiltelefone).

Bei einem Mobilfunk-Endgerät (oder anderen Funksende-/empfangsgerät mit integrierter Antenne) hat das vorgeschlagene Halterungs- und Dichtelement noch einen weiteren vorteilhaften Effekt: Die Gehäuse solcher Geräte werden heute üblicherweise mit Steckverbindungen montiert. Dabei wird auch eine mit der Leiterplatte verbundene Antenne mit eingebaut - und deren Massebezug wird durch die zwischen Gehäuseoberteil und Leiterplatte wirkende elastische Druckkraft des Halterungs- und Dichtelementes besser reproduzierbar.

In einer anderen Ausführung handelt es sich bei dem Gerät um ein Audiogerät, speziell einen Walkman, Discman oder MP3-Spieler oder auch ein Diktiergerät, mit entsprechendem Aufbau. Auch ein mit einer Lautsprechereinrichtung ausgerüsteter tragbarer Computer (Handheld-PC, PDA) oder Taschenübersetzer kann Gegenstand der Ausführung der Erfindung sein. Ebenso ist die Erfindung bei multifunktionellen Geräten mit Audiostufe und Lautsprechereinrichtung anwendbar, beispielsweise bei Kombinationsgeräten aus einem Mobiltelefon und einem Diktiergerät, einem Mobiltelefon und einem PDA oder einem PDA und einem MP3-Spieler.

Das Halterungs- und Dichtelement hat in einer bevorzugten Ausführung der Erfindung einen speziellen Luftkammer-Aufbau, der wesentlich zu einem guten und durch einen Austausch von Gehäuseoberschalen bzw. -blenden wenig beeinflußten Klang beiträgt. Insbesondere ist zwischen der (ersten) Schallaustrittsöffnung der Lautsprechereinheit und der (dritten) Schallaustrittsöffnung des Halterungs- und Dichtelementes eine erste, zentrale Luftkammer und seitlich von dieser eine zweite Luftkammer vorgesehen. Diese hat eine eigene (vierte) Schallaustrittsöffnung, die in eine entsprechend angeordnete (fünfte) Schallaustrittsöffnung im Gehäuseoberteil bzw. der Gehäuseblende mündet, und ist durch einen Schallkanal akustisch mit einem Wandungsabschnitt bzw. dem Boden der Lautsprechereinrichtung verbunden. In einer weiter bevorzugten Ausführung sind zwei derartige seitliche Luftkammern vorgesehen, die auf gleiche Weise akustisch mit der Lautsprechereinrichtung verbunden sind und jeweils eigene Schallaustrittsöffnungen haben.

Bevorzugt ist weiterhin eine Ausführung des Halterungs- und Dichtelementes mit einer umlaufenden Dichtlippe auf der dem Träger (der Leiterplatte) zugewandten Fläche und mit Dichtlippe(n) auf der dem Gehäuseoberteil zugewandten Fläche, welche die Schallaustrittsöffnung bzw. -öffnungen umgibt bzw. umgeben. In diesen Dichtlippen hat das Elastomere, aus dem das Halterungs- und Dichtelement besteht, eine geringe Wandungsstärke und geeignete Querschnittsform, die einerseits für einen akustisch dichten Abschluß in den entsprechenden Bereichen sorgen und andererseits eine geringe Andruckkraft auf das jeweils angrenzende Konstruktionselement (Leiterplatte bzw. Gehäuseoberteil oder -blende) ausüben.

Das Halterungs- und Dichtelement hat zweckmäßigerweise ein hohlzylindrisches Mittelteil, welches die in bekannter Weise zylindrische Hörkapsel elastisch umschließt und schwingungsdämpfend haltert. In der Wandung dieses hohlzylindrischen Mittelteils ist insbesondere an der dem Träger zugewandten Seite jeweils eine Ausnehmung zur Ausbildung des oben erwähnten Schallkanals bzw. der Schallkanäle zu der seitlichen Luftkammer bzw. den seitlichen Luftkammern vorgesehen. Die Wandung der Hörkapsel selbst hat sogenannte Zinnen, zwischen denen ihre Höhe - korrespondierend zu den Ausnehmungen der Wandung des Mittelteils - geringer ist, so daß der vom Boden der Hörkapsel ausgehende Schall durch deren Wandung und die Wandung des Mittelteils in die seitliche(n) Luftkammer(n) gelangen kann.

Die Erfindung ist insbesondere auch bei einem Gehäuseaufbau anwendbar, dessen Gehäuseoberteil selbst zweiteilig aufgebaut ist, also neben dem "strukturellen" Oberteil noch eine Oberschale bzw. Designblende hat. Hierbei sind die Schallaustrittsöffnungen des Gehäuseoberteils insbesondere in dieser Designblende vorgesehen, und die Schallaustrittsöffnungen des Halterungs- und Dichtelementes sind mit diesen ausgerichtet. Die erwähnten Dichtlippen auf der Oberseite des Halterungs-und Dichtelementes berühren dann die Designblende.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Fig. 1 eine perspektivische Darstellung eines Mobiltelefongehäuses gemäß einer Ausführungsform der Erfindung,
Fig. 2 eine Explosionsdarstellung dieses Aufbaus,
Fig. 3 eine perspektivische Darstellung des Halterungs- und Dichtelementes des Mobiltelefones nach Fig. 1 und 2 in einer Schrägansicht von oben und
Fig. 4 eine Explosionsdarstellung des Halterungs- und Dichtelementes, der Hörkapsel und eines Abschnitts der Leiterplatte des Mobiltelefons nach Fig. 1 bis 3 in einer Schrägansicht von unten.

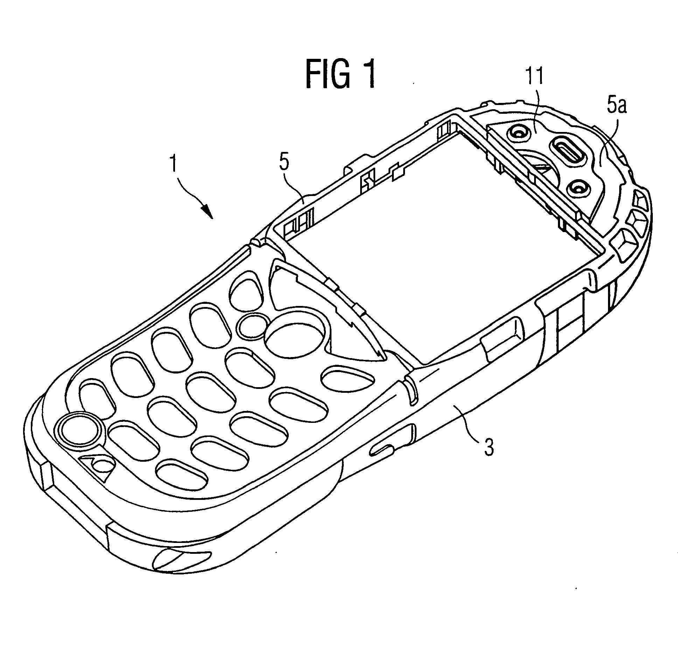

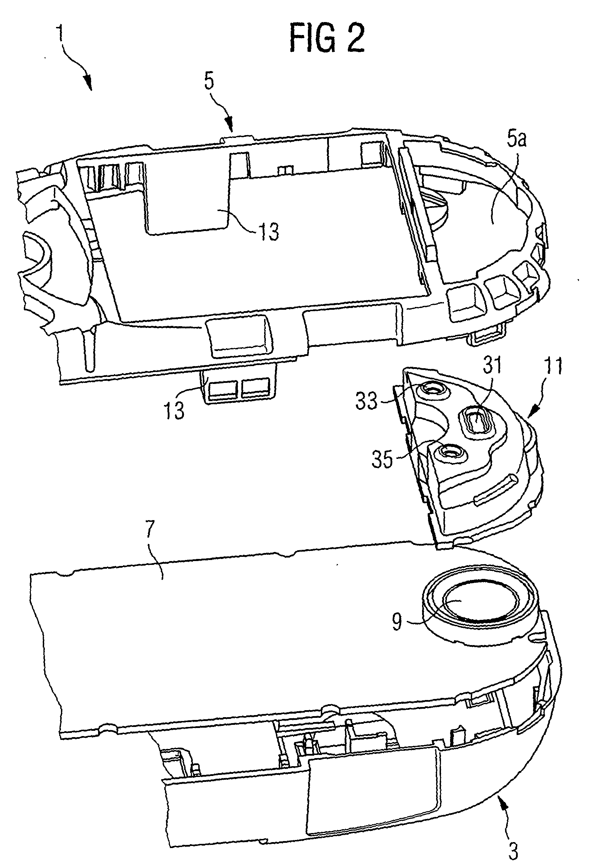

Fig. 1 und 2 zeigen ein Mobiltelefongehäuse 1, welches aus einem Gehäuseunterteil 3 und einem Gehäuseoberteil 5 besteht und eine - hier nur schematisch dargestellte - Leiterplatte 7, die die elektronischen Funktionskomponenten eines Mobiltelefons trägt, sowie (neben anderen, hier nicht dargestellten Teilen) einen Lautsprecher bzw. eine Hörkapsel 9 aufnimmt. Zur Halterung der Hörkapsel 9 ist ein Halterungs- und Dichtelement 11 vorgesehen, welches auf der Leiterplatte 7 ruht und in einen entsprechend geformten Ausschnitt 5a im Gehäuseoberteil paßt. Das Gehäuseunterteil 3 und Gehäuseoberteil 5 sind über Rastabschnitte 13 am Gehäuseoberteil, welche besonders gut in Fig. 2 zu erkennen sind, miteinander verrastet.

Das Mobiltelefongehäuse 1 wird auf der Oberseite durch eine Gehäuseoberschale bzw. Designblende komplettiert, die in den Figuren nicht dargestellt ist und die insbesondere auch den Ausschnitt 5a im Gehäuseoberteil 5, in den das Halterungs-und Dichtelement 11 ragt, überdeckt. In diesem Bereich hat die Designblende drei Schallaustrittsöffnungen, die mit - weiter unten genauer beschriebenen - Schallaustrittsöffnungen des Halterungs- und Dichtelementes 11 ausgerichtet sind.

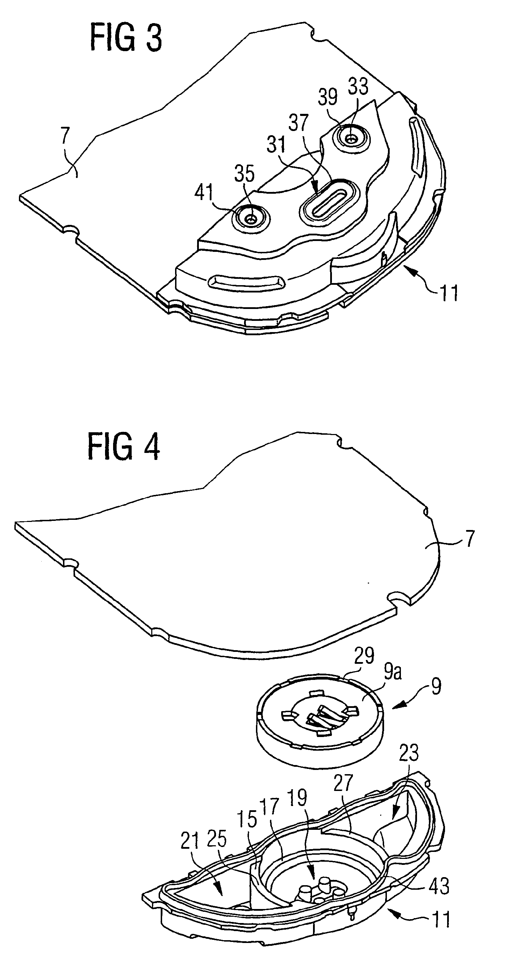

Das Halterungs- und Dichtelement 11 hat eine im wesentlichen flach halbzylindrische Grundform mit einem hohlzylindrischen Mittenabschnitt 15 (siehe Fig. 4), dessen Abmessungen derart auf diejenigen der Hörkapsel 9 abgestimmt sind, daß die Wandung des Mittenabschnitts 15 die Hörkapsel elastisch fest umschließt und im Halterungs- und Dichtelement 11 fixiert. Am Boden des Mittenabschnitts 15 ist ein umlaufender, nach innen vorstehender Rand 17 geformt, auf den im montierten Zustand die Oberseite der Hörkapsel 9 zu liegen kommt, so daß über der Hörkapsel im Mittenabschnitt 15 eine erste Luftkammer 19 gebildet wird. Seitlich des Mittenabschnitts 15 hat das Halterungs- und Dichtelement 11 zwei weitere Luftkammern 21 und 23. Diese sind über flache Ausnehmungen 25 und 27 in der Wandung des Mittenabschnitts 15 mit dem Mittenabschnitt - und damit der dort sitzenden Hörkapsel 9 - verbunden.

Die Hörkapsel 9 hat einen an sich bekannten Aufbau, der daher hier nicht weiter erläutert werden muß. In ihrer Wandung sind ebenfalls Ausnehmungen vorgesehen, die hier mit der Ziffer 29 bezeichnet sind und eine Schallüberleitung vom (in Fig. 4 zu erkennenden) Boden 9a der Hörkapsel in die Ausnehmungen 25, 27 des Mittenabschnitts und von dort in die Luftkammern 21, 23 ermöglichen.

In Fig. 2 und 3 ist gut zu erkennen, daß das Halterungs- und Dichtelement auf seiner Oberseite eine zentrale, langgestreckte Schallaustrittsöffnung 31 und zwei seitliche, kreisförmige Schallaustrittsöffnungen 33 und 35 aufweist. Die Schallaustrittsöffnungen 31 bis 35 sind jeweils von einer Dichtlippe 37 bis 41 umgeben, die im gebrauchsfertigen Zustand des Mobiltelefons die Unterseite der Designblende elastisch berühren und damit die Schallaustrittsöffnungen im Halterungs- und Dichtelement sowie diejenigen in der Designblende miteinander akustisch gegenüber der Umgebung abdichten.

Wie in Fig. 4 zu erkennen ist, ist auf der Unterseite des Halterungs- und Dichtelementes 11 eine umlaufende Dichtlippe 43 vorgesehen, die eine vergleichbare akustische Abdichtung des Innenraumes des Halterungs- und Dichtelementes, insbesondere der seitlichen Luftkammern 21 und 23, mit dem entsprechenden Abschnitt der Leiterplatte 7 gegen die Umgebung bewirkt.

Das Halterungs- und Dichtelement 11 ist insgesamt aus einem Elastomeren gefertigt und hat daher ausgezeichnete schwingungsdämpfende Eigenschaften; die Dichtlippen 37 bis 43 verbessern durch ihre geringe Wandungsstärke und die geeignete Querschnittsform die akustischen Eigenschaften in den entscheidenden Grenzbereichen zu den benachbarten Bauteilen (Leiterplatte bzw. Gehäuseoberschale) zusätzlich.

Das Halterungs- und Dichtelement 11 gleicht insgesamt in vorteilhafter Weise Herstellungstoleranzen der Gehäuseteile und gegebenenfalls auch der Hörkapsel aus. Der Einsatz ermöglicht in dem Mobiltelefon den Verzicht auf eine gesonderte Tonrufeinrichtung, indem der Tonruf mit der Hörkapsel selbst möglich wird. Hierdurch können die Leiterplatte wie auch das Gesamtvolumen des Telefons verkleinert werden, und es werden erhebliche Vorteile für die konstruktive Gestaltung des Gerätes und bei den Herstellungskosten erreicht.

Die Ausführung der Erfindung ist nicht auf das oben beschriebene Beispiel beschränkt, sondern ebenso in einer Vielzahl von Abwandlungen möglich, die im Rahmen fachgemäßen Handelns liegen.

## Patentansprüche

1. Elektronisches Gerät mit einer Lautsprechereinrichtung (9), welche eine erste Schallaustrittsöffnung aufweist, wobei das Gerät einen Träger (7), auf dem die Lautsprechereinrichtung angeordnet ist, und ein Gehäuseoberteil (5) aufweist, welches einen oberhalb der ersten Schallaustrittsöffnung liegenden Abschnitt hat, in dem eine zweite Schallaustrittsöffnungen vorgesehen ist,
wobei die Lautsprechereinrichtung in einem einstückig gefertigten, formelastischen Halterungs- und Dichtelement (11) aufgenommen ist, welches sich von der Oberseite des Trägers bis zur Unterseite des Gehäuseoberteils erstreckt und eine dritte Schallaustrittsöffnung (31) aufweist, welche mit der ersten und zweiten Schallaustrittsöffnung im wesentlichen ausgerichtet ist,
wobei das Halterungs- und Dichtelement (11) ein hohlzylindrisches Mittelteil (15) aufweist,
**dadurch gekennzeichnet, daß**
das Halterungs- und Dichtelement (11) eine zwischen der ersten und dritten Schallaustrittsöffnung liegende erste, zentrale Luftkammer (19) und mindestens eine seitlich der Lautsprechereinrichtung angeordnete zweite Luftkammer (21, 23) hat, welche durch einen Schallkanal (25, 27) mit einem Wandungsabschnitt der Lautsprechereinrichtung in Verbindung steht und eine vierte Schallaustrittsöffnung (33, 35) aufweist, die mit einer fünften Schallaustrittsöffnung im Gehäuseoberteil ausgerichtet ist,
und dass die Wandung der Lautsprechereinrichtung (9) sowie die Wandung des hohlzylindrischen Mittelteils (15) an der dem Träger (7) zugewandten Seite mindestens jeweils eine Ausnehmung (25, 27, 29) zur Ausbildung des Schallkanals bzw. der Schallkanäle zu der zweiten und wahlweise dritten Luftkammer (21, 23) aufweisen.

2. Gerät nach Anspruch 1,
**dadurch gekennzeichnet , daß**
der Träger (7) als eine Leiterplatte ausgebildet ist und/oder das Gehäuseoberteil als ein austauschbares Gehäuseteil ausgebildet ist.

3. Gerät nach Anspruch 1 oder 2,
**dadurch gekennzeichnet , daß**
das Halterungs- und Dichtelement eine dritte, seitlich der Lautsprechereinrichtung (9) vorgesehene Luftkammer (21, 23) aufweist, welche über einen zweiten Schallkanal (25, 27) mit einem Wandungsabschnitt der Lautsprechereinrichtung verbunden ist und eine sechste Schallaustrittsöffnung (33, 35) hat, die mit einer siebenten Schallaustrittsöffnung im Gehäuseoberteil ausgerichtet ist.

4. Gerät nach einem der vorangehenden Ansprüche,
**dadurch gekennzeichnet, daß**
an der dem Träger (7) zugewandten Fläche des Halterungs- und Dichtelementes eine erste umlaufende Dichtlippe (43) und auf der dem Gehäuseoberteil zugewandten Fläche des Halterungs-und Dichtelementes eine oder mehrere weitere Dichtlippen (37, 39, 41) vorgesehen sind, die jeweils eine Schallaustrittsöffnung (31, 33, 35) des Halterungs- und Dichtelementes (11) und des Gehäuseoberteils umgibt bzw. umgeben.

5. Gerät nach einem der vorangehenden Ansprüche,
**dadurch gekennzeichnet, daß**
das hohlzylindrische Mittelteil (15) die Lautsprechereinrichtung elastisch umschließt und schwingungsdämpfend haltert.

6. Gerät nach einem der vorangehenden Ansprüche,
**dadurch gekennzeichnet, daß**
das Gehäuseoberteil (5) zweiteilig aufgebaut ist, wobei eines seiner beiden Teile austauschbar ist und in diesem Teil die zweite Schallaustrittsöffnung und die wahlweise vorgesehene fünfte und siebente Schallaustrittsöffnung vorgesehen ist bzw. sind.

7. Gerät nach einem der vorangehenden Ansprüche,
**dadurch gekennzeichnet, daß**
zwischen der Leiterplatte (7) und dem Gehäuseunterteil (3) eine Antenne gehaltert ist, deren Fixierung durch die zwischen Gehäuseoberteil und Leiterplatte wirkende elastische Andruckkraft des Halterungs- und Dichtelementes (11) verbessert wird, wodurch eine verbesserte Reproduzierbarkeit des Massebezuges der Antenne bewirkt wird.

## Claims

1. Electronic appliance having a loudspeaker device (9) which has a first sound exit opening, where the appliance has a support (7), on which the loudspeaker device is arranged, and a top housing part (5) which has a section that is situated above the first sound exit opening and that contains a second sound exit opening,
the loudspeaker device being held in an integrally produced mounting and sealing element (11) which has an elastic shape and which extends from the top of the support to the underside of the top housing part and has a third sound exit opening (31) which is essentially oriented towards the first and second sound exit opening, with the mounting and sealing element (11) having a hollow-cylindrical middle part (15),
**characterized in that**
the mounting and sealing element (11) has a first, central air chamber (19), situated between the first and third sound exit openings, and at least one second air chamber (21, 23), which is arranged to the side of the loudspeaker device and which is connected by a sound channel (25, 27) to a wall section in the loudspeaker device and has a fourth sound exit opening (33, 35) which is oriented towards a fifth sound exit opening in the top housing part,
and **in that** the wall of the loudspeaker device (9) and also the wall of the hollow-cylindrical middle part (15) have, on the side which is facing the support (7), at least one respective recess (25, 27, 29) for forming the sound channel or the sound channels to the second and optionally the third air chamber (21, 23).

2. Appliance according to Claim 1,
**characterized in that**
the support (7) is in the form of a printed circuit board and/or the top housing part is in the form of an interchangeable housing part.

3. Appliance according to Claim 1 or 2,
**characterized in that**
the mounting and sealing element has a third air chamber (21, 23), which is provided at the side of the loudspeaker device (9), which is connected via a second sound channel (25, 27) to a wall section in the loudspeaker device and which has a sixth sound exit opening (33, 35), which is oriented towards a seventh sound exit opening in the top housing part.

4. Appliance according to one of the preceding claims,
**characterized in that**
**that** face of the mounting and sealing element which is facing the support (7) has a first circumferential sealing lip (43), and that face of the mounting and sealing element which is facing the top housing part has one or more further sealing lips (37, 39, 41), said sealing lips respectively surrounding a sound exit opening (31, 33, 35) in the mounting and sealing element (11) and in the top housing part.

5. Appliance according to one of the preceding claims,
**characterized in that**
the hollow-cylindrical middle part (15) elastically encloses the loudspeaker device and mounts it so as to damp oscillations.

6. Appliance according to one of the preceding claims,
**characterized in that**
the top housing part (5) is of two-part design, one of its two parts being interchangeable and this part containing the second sound exit opening and the optionally provided fifth and seventh sound exit openings.

7. Appliance according to one of the preceding claims,
**characterized in that**
the printed circuit board (7) and the bottom housing part (3) have an antenna mounted between them whose fixing is improved by the elastic pressure force, acting between the top housing part and the printed circuit board, from the mounting and sealing element (11), this bringing about improved reproducibility of the antenna's earth reference.

## Revendications

1. Appareil électronique avec un dispositif de haut-parleur (9), lequel présente une première ouverture de sortie sonore, l'appareil présentant un support (7) sur lequel est disposé le dispositif de haut-parleur, et une partie supérieure de boîtier (5), qui a une section se trouvant au-dessus de la première ouverture de sortie sonore, dans laquelle est prévue une deuxième ouverture de sortie sonore,
le dispositif de haut-parleur étant logé dans un élément de fixation et d'étanchéité (11) fabriqué d'une seule pièce, de forme élastique, lequel s'étend du côté supérieur du support jusqu'au côté inférieur de la partie supérieure du boîtier et présente une troisième ouverture de sortie sonore (31) qui est essentiellement alignée avec la première et la deuxième ouverture de sortie sonore, l'élément de fixation et d'étanchéité (11) présentant une partie centrale cylindrique creuse (15),
**caractérisé en ce que**
l'élément de fixation et d'étanchéité (11) a une première chambre d'air centrale (19) se trouvant entre la première et la troisième ouverture de sortie sonore et au moins une deuxième chambre d'air (21, 23) disposée latéralement au dispositif de haut-parleur, laquelle se trouve en liaison avec une section de paroi du dispositif de haut-parleur par un canal sonore (25, 27) et présente une quatrième ouverture de sortie sonore (33, 35) qui est alignée avec une cinquième ouverture de sortie sonore dans la partie supérieure du boîtier,
et **en ce que** la paroi du dispositif de haut-parleur (9) ainsi que la paroi de la partie centrale cylindrique creuse (15) présentent sur le côté orienté vers le support (7) au moins à chaque fois un évidement (25, 27, 29) pour former le canal sonore resp. les canaux sonores vers la deuxième et, facultativement, troisième chambre d'air (21, 23).

2. Appareil selon la revendication 1,
**caractérisé en ce que**
le support (7) est conçu comme une carte de circuits imprimés et/ou la partie supérieure du boîtier est conçue en tant que partie de boîtier échangeable.

3. Appareil selon la revendication 1 ou 2,
**caractérisé en ce que**
l'élément de fixation et d'étanchéité présente une troisième chambre d'air (21, 23) prévue latéralement au dispositif de haut-parleur (9), laquelle est reliée au moyen d'un deuxième canal sonore (25, 27) à une section de paroi du dispositif de haut-parleur et a une sixième ouverture de sortie sonore (33, 35), qui est alignée avec une septième ouverture de sortie sonore dans la partie supérieure du boîtier.

4. Appareil selon l'une des revendications précédentes,
**caractérisé en ce que**
sur la surface, orientée vers le support (7), de l'élément de fixation et d'étanchéité est prévue une première lèvre d'étanchéité périphérique (43) et sur la surface, orientée vers la partie supérieure du boîtier, de l'élément de fixation et d'étanchéité sont prévues une ou plusieurs autres lèvres d'étanchéité (37, 39, 41), qui entoure resp. entourent à chaque fois une ouverture de sortie sonore (31, 33, 35) de l'élément de fixation et d'étanchéité (11) et de la partie supérieure du boîtier.

5. Appareil selon l'une des revendications précédentes,
**caractérisé en ce que**
la partie centrale cylindrique creuse (15) entoure le dispositif de haut-parleur de façon élastique et le fixe en amortissant les vibrations.

6. Appareil selon l'une des revendications précédentes,
**caractérisé en ce que**
la partie supérieure du boîtier (5) est structurée en deux parties, une de ses deux parties pouvant être échangée et dans cette partie est resp. sont prévue(s) la deuxième ouverture de sortie sonore et la cinquième et septième ouverture de sortie sonore prévues facultativement.

7. Appareil selon l'une des revendications précédentes,
**caractérisé en ce**
**qu'**entre la carte de circuits imprimés (7) et la partie inférieure du boîtier (3) est fixée une antenne dont la fixation est améliorée par la force de pression élastique de l'élément de fixation et d'étanchéité (11), agissant entre la partie supérieure du boîtier et la carte de circuits imprimés, une reproductibilité améliorée du recouvrement de masse de l'antenne étant ainsi effectuée.
